# EUROPEAN PATENT APPLICATION

(11) **EP 2 023 461 A1**
(43) Date of publication of application: **11.02.2009**
(21) Application number: 07744030.3
(22) Date of filing: 24.05.2007
(51) Int. Cl.: H02J 7/10, H01M 10/44, H02J 7/04

(54) **CHARGING CIRCUIT, CHARGING SYSTEM, AND CHARGING METHOD**

(30) Priority: 07.06.2006 JP 2006158076
(71) Applicant: Panasonic Corporation, Kadoma-shi Osaka 571-8501 (JP)
(72) Inventor: MURAOKA, Yoshiyuki, c/o Panasonic Corporation IPROC, Chuo-ku, Osaka-shi, Osaka 540-6207 (JP); NAKAI, Haruya, c/o Panasonic Corporation IPROC, Chuo-ku, Osaka-shi, Osaka 540-6207 (JP); OKADA, Yukihiro, c/o Panasonic Corporation IPROC, Chuo-ku, Osaka-shi, Osaka 540-6207 (JP)
(74) Representative: Schwabe - Sandmair - Marx
(86) International application number: PCT/JP2007/060596
(87) International publication number: WO 2007/142041

(57) **Abstract**

A charging circuit includes: a connecting terminal for connection to a nonaqueous-electrolyte secondary battery; a heating portion heating the nonaqueous-electrolyte secondary battery; a charging portion charging the nonaqueous-electrolyte secondary battery connected to the connecting terminal; and a control unit which allows the charging portion to charge the nonaqueous-electrolyte secondary battery after allowing the heating portion to heat the nonaqueous-electrolyte secondary battery, lowers the temperature of the nonaqueous-electrolyte secondary battery, and allows the charging portion to further charge the nonaqueous-electrolyte secondary battery.

## Description

### Technical Field

The present invention relates to a charging circuit, a charging system and a charging method for charging a nonaqueous-electrolyte secondary battery.

### Background Art

Recent developments in electronic technology have heightened the performance and reduced the size of a transportation apparatus such as a heavy-load apparatus and an electric automobile, thereby requiring a rise in the energy density and life of a secondary battery employed for the apparatus. A nickel-cadmium battery, a nickel-hydrogen battery, a lead-acid battery, a lithium-ion secondary battery or the like is used as the secondary battery, and among those, a lithium-ion secondary battery as the nonaqueous-electrolyte secondary battery is optimum for downsizing and lightening.

Thenonaqueous-electrolytesecondary battery generally has a property called a cycle degradation, thereby reducing the available discharge capacity as the battery is repeatedly charged and discharged, and thus, deteriorating the battery life. The cycle degradation is accelerated by charging the nonaqueous-electrolyte secondary battery under a low-temperature environment. In a lithium-ion secondary battery, for example, the charge acceptance of lithium ions in the negative electrode lowers under a low-temperature environment: metallic lithium is deposited on the surface of the negative electrode, the deposited metallic lithium reacts with an electrolyte or the like to form an insulator and the thus formed insulator raises the internal resistance of the lithium-ion secondary battery, thereby reducing the charge acceptance. In the thus reduced charge-acceptance condition, the lithium-ion secondary battery is charged to thereby quicken the cycle degradation.

This phenomenon emerges more conspicuously when a battery is charged at a low depth of charge. In a state where a depth of charge is high, the electrodes constituting the battery expand in thickness to compress a separator and shorten the distance between the positive and negative electrodes, thereby improving the charge acceptance. This makes it hard to deposit metallic lithium on the negative-electrode surface, thereby suppressing a rise in the internal resistance. In a state where a depth of charge is low, a phenomenon reverse thereto takes place to thereby promote the cycle degradation.

On the other hand, charging a lithium-ion secondary battery under a high-temperature environment accelerates the dissolution of a positive-electrode active material inside of the battery or the decomposition of an electrolyte, thereby hastening a deterioration in the battery along with the rise in the battery temperature.

Taking the above into account, a conventional art (e.g., Patent Document 1) is known of charging a secondary battery at a predetermined temperature moderate enough to hinder accelerating the dissolution of a positive-electrode active material which is raised by a means for cooling and a means for heating the secondary battery, thereby suppressing a decline in the charge acceptance of the secondary battery caused by too low a battery temperature, or suppressing a battery degradation caused by too high a battery temperature.

While being charged, however, the secondary battery stores more energy along with a rise in the depth of charge equivalent to the ratio of a charging capacity to a battery rated capacity, or a so-called SOC (state of charge), thereby heightening the temperature abnormally, for example, when the battery collapses in the last charging stage where the SOC increases. If the secondary battery is charged at the predetermined temperature raised as described above, the temperature of the secondary battery becomes higher in the last stage, thereby activating a chemical reaction inside of the secondary battery and thus heightening the temperature more abnormally.
Patent Document 1: Japanese Patent Laid-Open Publication No. 8-185897

Disclosure of the Invention

In view of the problems, it is an object of the present invention to provide a charging circuit, a charging system and a charging method capable of suppressing a degradation in a nonaqueous-electrolyte secondary battery when charged and keeping the temperature from becoming abnormally higher in the last charging stage.

A charging circuit according to an aspect of the present invention includes: a connecting terminal for connection to a nonaqueous-electrolyte secondary battery; a heating portion heating the nonaqueous-electrolyte secondary battery; a charging portion charging the nonaqueous-electrolyte secondary battery connected to the connecting terminal; and a control unit which allows the charging portion to charge the nonaqueous-electrolyte secondary battery after allowing the heating portion to heat the nonaqueous-electrolyte secondary battery, lowers the temperature of the nonaqueous-electrolyte secondary battery, and allows the charging portion to further charge the nonaqueous-electrolyte secondary battery.

According to this configuration, the nonaqueous-electrolyte secondary battery is charged after heated by the heating portion. Therefore, at a low charge depth and charge acceptance in the nonaqueous-electrolyte secondary battery before the charge progresses, the temperature of the nonaqueous-electrolyte secondary battery rises to suppress a cycle degradation. As the charge progresses, the depth of charge rises to dissolve more active material at the positive electrode. Accordingly, the nonaqueous-electrolyte secondary battery is charged by lowering the temperature, thereby suppressing a dissolution of the positive-electrode active material or a decomposition of the electrolyte and keeping some dissolution of the positive-electrode active material from causing a cycle degradation. If energy stored in the nonaqueous-electrolyte secondary battery increases as the charge further progresses, then the temperature drops, thereby keeping the temperature from becoming extraordinarily higher in the last charging stage.

Furthermore, a charging system according to an aspect of the present invention includes an electric apparatus supplied electric power by a nonaqueous-electrolyte secondary battery and a charging circuit charging the nonaqueous-electrolyte secondary battery.

According to this configuration, in the electric apparatus supplied electric power by the nonaqueous-electrolyte secondary battery, a cycle degradation can be suppressed in the nonaqueous-electrolyte secondary battery, and the temperature of the nonaqueous-electrolyte secondary battery can be kept from becoming extraordinarily higher in the last charging stage.

Moreover, a charging method according to an aspect of the present invention includes: a process of heating a nonaqueous-electrolyte secondary battery; a process of charging the nonaqueous-electrolyte secondary battery after heating the nonaqueous-electrolyte secondary battery; and a process of lowering the temperature of the nonaqueous-electrolyte secondary battery after charging the nonaqueous-electrolyte secondary battery.

According to this configuration, the nonaqueous-electrolyte secondary battery is charged after heated by the heating portion. Therefore, at a low charge depth and charge acceptance in the nonaqueous-electrolyte secondary battery before the charge progresses, the temperature of the nonaqueous-electrolyte secondary battery rises to suppress a cycle degradation. As the charge progresses, the depth of charge rises to dissolve more active material at the positive electrode. Accordingly, the nonaqueous-electrolyte secondary battery is charged by lowering the temperature, thereby suppressing a dissolution of the positive-electrode active material and keeping some dissolution of the positive-electrode active material from causing a cycle degradation. If energy stored in the nonaqueous-electrolyte secondary battery increases as the charge further progresses, then the temperature drops, thereby keeping the temperature from becoming extraordinarily higher in the last charging stage.

### Brief Description of the Drawings

Fig. 1 is a perspective view showing an external appearance of a charging apparatus provided with a charging circuit according to a first embodiment of the present invention.
Fig. 2 is a side view showing an external appearance of an electric tool provided with a battery pack charged by the charging apparatus of Fig. 1.
Fig. 3 is a perspective view showing an external appearance of the battery pack of Fig. 2.
Fig. 4 is a sectional view showing the charging apparatus of Fig. 1 and the battery pack of Fig. 2 attached thereto.
Fig. 5 is a block diagram showing a configuration of the charging circuit according to the first embodiment of the present invention.
Fig. 6 is a flow chart showing an operation of the charging circuit of Fig. 5.
Fig. 7 is a graphical representation showing a correlation between the SOC, terminal voltage and temperature of a secondary battery.
Fig. 8 is a flow chart showing another operation of the charging circuit of Fig. 5.
Fig. 9 is a block diagram showing a configuration of a charging circuit according to a second embodiment of the present invention.
Fig. 10 is a flow chart showing an operation of the charging circuit of Fig. 9.
Fig. 11 is a graphical representation showing a correlation between the SOC and terminal voltage of a secondary battery and the setting temperature correlated with the SOC of the secondary battery by an LUT.
Fig. 12 is a graphical representation showing transitions in the percentage of a maintained capacity in an initial capacity when detecting a pack capacity every 100 cycles in repeated charge-and-discharge cycles under the conditions of Practical Examples 1 to 6 and Comparative Examples 1 and 2.

### Best Mode for Implementing the Invention

Embodiments of the present invention will be below described with reference to the drawings. In each figure, component elements are given the same reference characters and numerals, as long as they are identical to each other, and a description thereof is omitted.

### (First Embodiment)

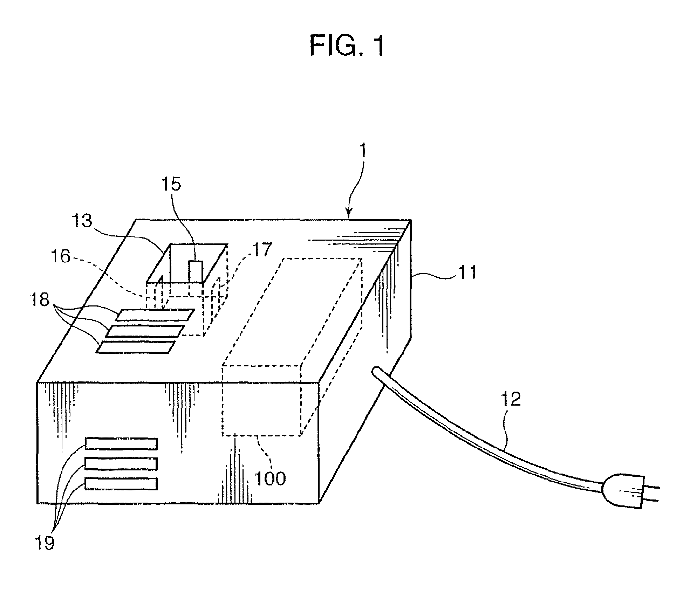

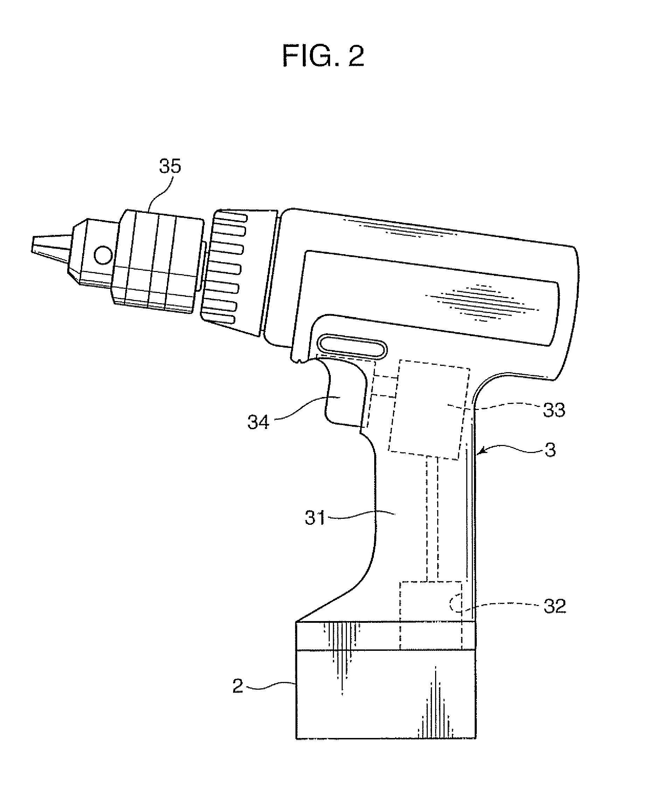

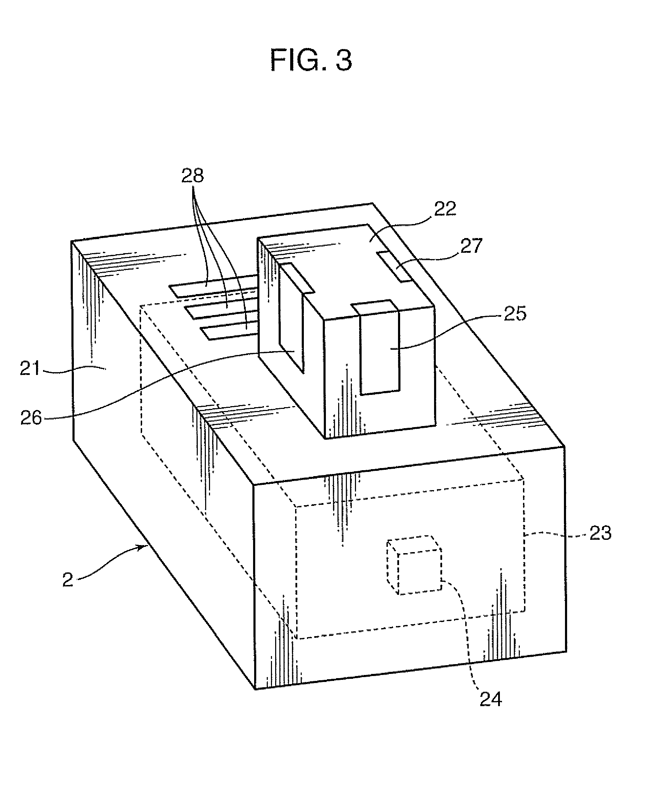

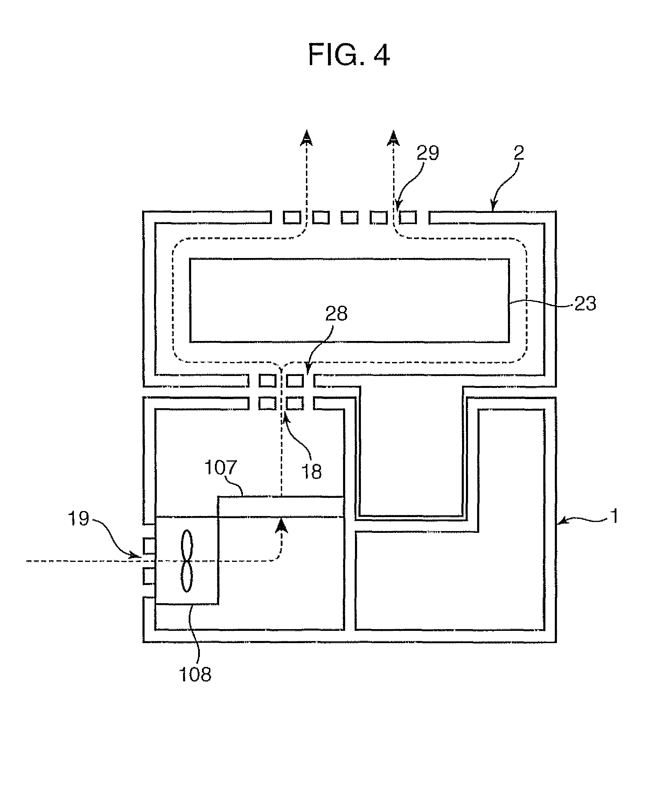

Fig. 1 is a perspective view showing an external appearance of a charging apparatus 1 provided with a charging circuit according to a first embodiment of the present invention. Fig. 2 is a side view showing an external appearance of an electric tool 3 provided with a battery pack 2 charged by the charging apparatus 1. Fig. 3 is a perspective view showing an external appearance of the battery pack 2 of Fig. 2. Fig. 4 is a sectional view showing the charging apparatus 1 of Fig. 1 and the battery pack 2 of Fig. 2 attached thereto.

The electric tool 3 includes: an attachment portion 32 for attaching the battery pack 2 freely which is arranged inside of the grip of a frame 31; a motor 33 driven by an electric current supplied from the battery pack 2 which is arranged inside of the frame 31; a trigger switch 34 for conducting the on-off control of a current supply to the motor 33 which is arranged in the grip of the frame 31; and a rotator 35 for attaching a drill spindle or the like which is arranged at the front end of the frame 31.

The batterypack 2 of Fig. 3 to be fitted to the attachment portion 32 of the electric tool 3 shown in Fig. 2 includes a frame 21 having a substantially box shape and a connector 22 protruding from a face of the frame 21 and attached to the attachment portion 32 of the electric tool 3. The frame 21 houses a secondary battery 23 and a temperature sensor 24, and the connector 22 includes electrodes 25, 26 and 27 exposed to faces thereof.

The electrodes 25, 26 and 27 are connected, for example, to the negative electrode, positive electrode of the secondary battery 23 and the temperature sensor 24, respectively. The battery pack 2 is attached to the attachment portion 32 of the electric tool 3 to thereby supply an electric current from the secondary battery 23 to the motor 33 via the electrodes 25 and 26. Fig. 2 shows the battery pack 2 attached to the attachment portion 32 of the electric tool 3.

The charging apparatus 1 of Fig. 1 includes: a frame 11 having a substantially box shape; an AC cord 12 connected, for example, to an AC-100V commercial power source; and a concave connector 13 for inserting the connector 22 of the battery pack 2 in the upper face of the frame 11. The frame 11 houses a charging circuit 100 for charging the secondary battery 23.

The connector 13 includes a negative terminal 15, a positive terminal 16 and a temperature input terminal 17 in inside faces thereof which are electrically connected to the electrodes 25, 26 and 27 of the connector 22, respectively, in such a way that the electrodes 25, 26 and 27 are pressed into contact with the negative terminal 15, the positive terminal 16 and the temperature input terminal 17 by attaching the battery pack 2 to the charging apparatus 1.

The connector 22 of the battery pack 2 is inserted into the connector 13 of the charging apparatus 1 to thereby connect the negative terminal 15 to the negative electrode of the secondary battery 23 via the electrode 25, connect the positive terminal 16 to the positive electrode of the secondary battery 23 via the electrode 26 and connect the temperature input terminal 17 to the temperature sensor 24 via the electrode 27.

The battery pack 2 and the charging apparatus 1 are formed with vent holes 28 and 18, respectively, for example, having a slit shape in positions on the surfaces facing each other when coupled together. Further, the battery pack 2 is formed, in the wall face opposite to the vent hole 28 of the frame 21, with a vent hole 29, for example, having such a slit shape as shown in Fig. 4, and the charging apparatus 1 is formed with a slit-shaped vent hole 19 in a side face of the frame 11.

As shown in Fig. 4, the charging apparatus 1 has a fan 108 inside for sucking in air through the vent hole 19, supplying the air to the secondary battery 23 of the battery pack 2 through the vent holes 18 and 28 after heated by a heater 107, and sending it out from the vent hole 29.

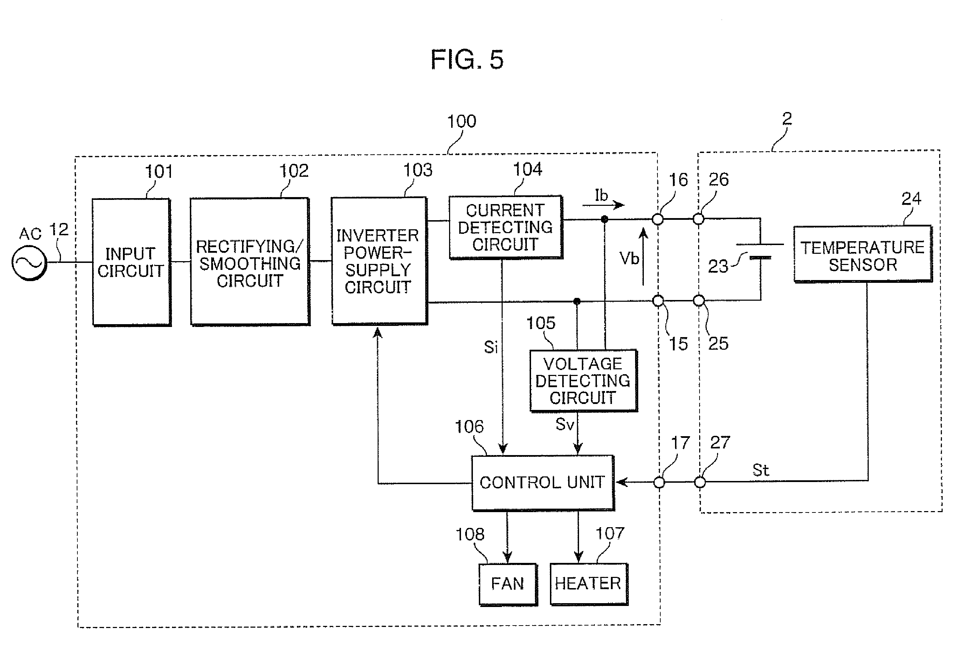

Fig. 5 is a block diagram showing a configuration of the charging circuit 100 according to the first embodiment of the present invention, with the charging apparatus 1 and the battery pack 2 coupled together. The battery pack 2 of Fig. 5 includes the secondary battery 23, the temperature sensor 24 and the electrodes 25, 26 and 27. The secondary battery 23 is, for example, a lithium-ion secondary battery as a nonaqueous-electrolyte secondary battery provided with a nonaqueous electrolyte. However, for example, it may be appreciated that another kind of nonaqueous-electrolyte secondary battery is employed such as a polymer battery. The secondary battery 23 may be made up of a plurality of battery cells connected in series, connected in parallel, or connected both in series and in parallel and may have any number of battery cells.

The negative and positive electrodes of the secondary battery 23 are connected to the electrodes 25 and 26, respectively. The temperature sensor 24 is, for example, a thermocouple or a thermistor, and detects a temperature T of the secondary battery 23 and outputs a battery temperature signal St indicating the temperature T to the temperature input terminal 17 via the electrode 27. The temperature input terminal 17 receiving the battery temperature signal St obtained by the temperature sensor 24 corresponds to an example of the temperature detecting portion.

The charging circuit 100 of Fig. 5 includes an input circuit 101, a rectifying/smoothing circuit 102, an inverter power-supply circuit 103 (charging portion), a current detecting circuit 104, a voltage detecting circuit 105, the negative-electrode terminal 15 (connecting terminal), the positive-electrode terminal 16 (connecting terminal), the temperature input terminal 17, a control unit 106, the heater 107 (heating portion) and the fan 108 (cooling portion).

The input circuit 101, for example, formed by a transformer receives, for example, a commercial AC-power voltage AC100V from a commercial AC-power source AC, for example, through the AC cord 12 connected to a power outlet, drops this voltage to a predetermined voltage and outputs it to the rectifying/smoothing circuit 102.

The rectifying/smoothing circuit 102, for example, formed by a diode bridge, a capacitor and the like converts the AC voltage outputted from the input circuit 101 into a DC voltage and outputs it to the inverter power-supply circuit 103 which is a so-called switching power-supply circuit. The inverter power-supply circuit 103 supplies an electric current Ib corresponding to a control signal from the control unit 106 to between the positive-electrode terminal 16 and the negative-electrode terminal 15 via the current detecting circuit 104, thereby charging the secondary battery 23, or applies a voltage Vb corresponding to a control signal from the control unit 106 to between the positive-electrode terminal 16 and the negative-electrode terminal 15 via the current detecting circuit 104, thereby charging the secondary battery 23.

The current detecting circuit 104 detects the charging current Ib flowing from the inverter power-supply circuit 103 through the positive-electrode terminal 16 to the secondary battery 23 and outputs a current-value signal Si indicating a current value thereof to the control unit 106. The voltage detecting circuit 105 measures the voltage Vb between the positive-electrode terminal 16 and the negative-electrode terminal 15 and outputs a voltage-value signal Sv indicating a voltage value thereof to the control unit 106.

The heater 107, for example, formed by a heating element such as a ceramic heater, a PTC (positive temperature coefficient) and a heating wire is the heating portion generating heat in response to a control signal from the control unit 106. The fan 108 supplies, to the heater 107, air sucked in through the vent hole 19 in response to a control signal from the control unit 106, and supplies the heated air through the vent holes 18 and 28 to the secondary battery 23 of the battery pack 2, thereby heating the secondary battery 23.

The control unit 106 is, for example, configured by: a CPU (central processing unit) executing a predetermined arithmetic processing; an ROM (read only memory) as a non-volatile storage element having a predetermined control program on record; an RAM (random access memory) as a volatile storage element recording data temporarily; an A/D converter converting the current-value signal Si, the voltage-value signal Sv and the battery temperature signal St into a digital signal; peripheral circuits thereof; and the like.

The control unit 106 executes the control program stored in the ROM to control the operation of the inverter power-supply circuit 103 based on the current-value signal Si and the voltage-value signal Sv, thereby conducting a charging operation in a constant-current (CC) mode of charging the secondary battery 23 with a constant current or in a constant-voltage (CV) mode of charging the secondary battery 23 with a constant voltage. Further, the control unit 106 controls the operation of the heater 107 and the fan 108 based on the battery temperature signal St, thereby controlling the temperature of the secondary battery 23.

Next, the principle will be described of suppressing a cycle degradation in the secondary battery 23 using the charging circuit 100. As described earlier, the secondary battery 23 as the nonaqueous-electrolyte secondary battery deposits metallic lithium and forms an insulator on the surface of the negative electrode at a lower temperature, thereby accelerating the cycle degradation when charged at the thus reduced charge acceptance. On the other hand, as the temperature of the secondary battery 23 becomes higher, the dissolution of a positive-electrode active material is promoted to thereby accelerate the cycle degradation.

The dissolution of the positive-electrode active material is reduced as the SOC of the secondary battery 23 becomes smaller while it is raised as the SOC becomes greater. Hence, as the SOC of the secondary battery 23 becomes smaller, raising the temperature of the secondary battery 23 less affects the cycle degradation caused by the dissolution of the positive-electrode active material and relatively more affects the cycle degradation caused by the charge acceptance.

On the other hand, as the SOC of the secondary battery 23 becomes greater, raising the temperature of the secondary battery 23 more affects the cycle degradation caused by the dissolution of the positive-electrode active material and relatively less affects the cycle degradation caused by the charge acceptance.

Therefore, the balance of an effect on the cycle degradation caused by the charge acceptance and an effect on the cycle degradation caused by the dissolution of the positive-electrode active material lowers the temperature T for suppressing a cycle degradation in the secondary battery 23 as the secondary battery 23 is further charged to increase the SOC.

Accordingly, the temperature T of the secondary battery 23 is raised when the SOC of the secondary battery 23 is low while the temperature T of the secondary battery 23 is dropped when the SOC of the secondary battery 23 is high. In other words, the temperature T of the secondary battery 23 is dropped according to a rise in the SOC of the secondary battery 23, thereby enhancing in balance the reduction effect on the cycle degradation caused by the charge acceptance and the reduction effect on the cycle degradation caused by the dissolution of the positive-electrode active material. This makes it possible to suppress a deterioration in the nonaqueous-electrolyte secondary battery when charged. Since the temperature T of the secondary battery 23 is lowered according to a rise in the SOC of the secondary battery 23 when charged, the temperature T of the secondary battery 23 becomes lower in the last charging stage where the SOC increases, thereby suppressing a chemical reaction inside of the secondary battery 23 in the last charging stage and thus keeping the secondary battery 23 from raising the temperature abnormallydue to some collapse in the last charging stage.

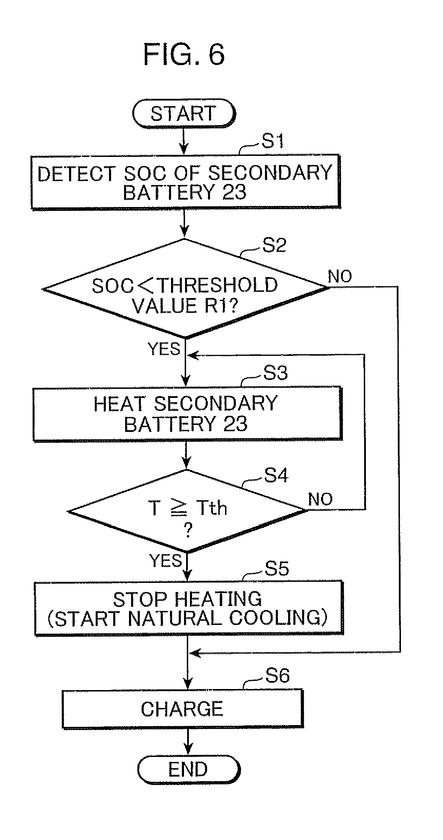

Next, an operation will be described of the charging circuit 100 having the above configuration. Fig. 6 is a flow chart showing an operation of the charging circuit 100 for realizing the above principle. First, upon attaching the battery pack 2 to the charging apparatus 1, the voltage detecting circuit 105 detects the voltage Vb between the negative-electrode terminal 15 and the positive-electrode terminal 16, in other words, the output voltage of the secondary battery 23, and outputs the voltage-value signal Sv indicating the voltage Vb to the control unit 106. The voltage Vb changes according to variations in the SOC equivalent to the ratio of a charging capacity to a battery rated capacity of the secondary battery 23, meaning that the voltage-value signal Sv indicates the SOC indirectly. The control unit 106 can obtain the SOC from the voltage-value signal Sv, for example, by referring to a data table stored in advance in the ROM indicating a relationship between the voltage-value signal Sv and the SOC, thereby detecting an SOC of the secondary battery 23 (step S1). In this case, the voltage detecting circuit 105 corresponds to an example of the charge-depth detecting portion.

The voltage Vb varies according to the charging current of the secondary battery 23. For example, when the secondary battery 23 is charged with a constant current in a constant-current (CC) mode, the voltage-value signal Sv is converted into an SOC, using a data table indicating a relationship to the charging current Ib set beforehand. However, for example, the charging current Ib varies in a constant-voltage (CV) charging mode, thereby changing the voltage Vb. In this case, the control unit 106 can obtain the SOC from the current-value signal Si and the voltage-value signal Sv, for example, by using a data table set according to the charging current Ib or by another means, for example, based on the current-value signal Si secured by the current detecting circuit 104.

Alternatively, there is no need to convert the voltage-value signal Sv into an SOC, and for example, it may be appreciated that the voltage-value signal Sv remains unchanged as information indicating an SOC indirectly. Besides, the voltage detecting circuit 105 is not limited to detecting an open-circuit voltage of the secondary battery 23 as information indicating an SOC indirectly, and for example, it may be appreciated that the voltage detecting circuit 105 detects the voltage Vb while the secondary battery 23 is outputting a predetermined load current as information indicating an SOC indirectly, or alternatively, for example, that the voltage detecting circuit 105 detects the voltage Vb while the inverter power-supply circuit 103 is sending a predetermined charging current to the secondary battery 23 is outputting as information indicating an SOC indirectly. In addition, the charge-depth detecting portion is not limited to detecting a voltage between both ends of the secondary battery 23 as information indicating an SOC indirectly, and for example, it may be appreciated that it calculates an SOC by integrating the charging current Ib of the secondary battery 23 detected by the current detecting circuit 104.

Next, the control unit 106 compares an SOC of the secondary battery 23 with a predetermined threshold value R1 (first threshold value) based on the voltage-value signal Sv obtained by the voltage detecting circuit 105 (step S2). For example, because of the above described balance of an effect on the cycle degradation caused by the charge acceptance and an effect on the cycle degradation caused by the dissolution of the positive-electrode active material, the threshold value R1 is set to an SOC value for suppressing a cycle degradation more by lowering than by raising the temperature. This SOC value can be obtained, for example, in experiments and is, for example, approximately 70 %, for example, in the secondary battery 23 having electrodes made of carbon.

In further detail, the voltage Vb corresponding to the SOC threshold value R1 is preset as a threshold value V1. The control unit 106 compares the SOC and the threshold value R1 indirectly by comparing the voltage Vb indicated by the voltage-value signal Sv and the threshold value V1 (step S2). If the voltage Vb is below the threshold value V1, it decides the SOC of the secondary battery 23 is below the threshold value R1 (YES at the step S2) to move the processing to a step S3 for heating the secondary battery 23. On the other hand, if the voltage Vb is equal to or above the threshold value V1, it decides the SOC of the secondary battery 23 is equal to or above the threshold value R1 (NO at the step S2). In this case, the processing shifts to a step S6 for starting to charge the secondary battery 23 without heating it because the secondary battery 23 can obtain a greater cycle-degradation suppression effect in a lower temperature. When the SOC is equal to or above the threshold value R1, the charging temperature T is preferably 20-30 °C.

Next, in the step S3, the control unit 106 issues a control signal for allowing the heater 107 to generate heat and driving the fan 108, the fan 108 sucks in air through the vent hole 19 and supplies the air to the secondary battery 23 of the battery pack 2 through the vent holes 18 and 28 after heated by the heater 107, thereby heating the secondary battery 23.

Sequentially, the control unit 106 receives the battery temperature signal St outputted from the temperature sensor 24 via the electrode 27 and the temperature input terminal 17, acquires the temperature T of the secondary battery 23 from the battery temperature signal St, compares a set temperature Tth determined in advance and the temperature T (step S4), and if the temperature T has not reached the set temperature Tth (NO at the step S4), then returns the processing to the step S3 for continuing heating the secondary battery 23.

If the temperature T has reached the set temperature Tth (YES at the step S4), the control unit 106 issues a control signal for stopping the heater 107 to generate heat and stopping driving the fan 108, thereby stopping heating the secondary battery 23 (step S5).

As a result, the temperature of the secondary battery 23 is set to the set temperature Tth, for example, 60 °C. However, it is not limited to 60 °C and can be preferably set, for example, to 20-60 °C, or more desirably, 40-50 °C.

Next, in response to a control signal given by the control unit 106, the inverter power-supply circuit 103 supplies a predetermined constant current as the current Ib to the secondary battery 23 via the current detecting circuit 104, the positive-electrode terminal 16 and the electrode 25, thereby charging the secondary battery 23 to raise the SOC of the secondary battery 23 (step S6).

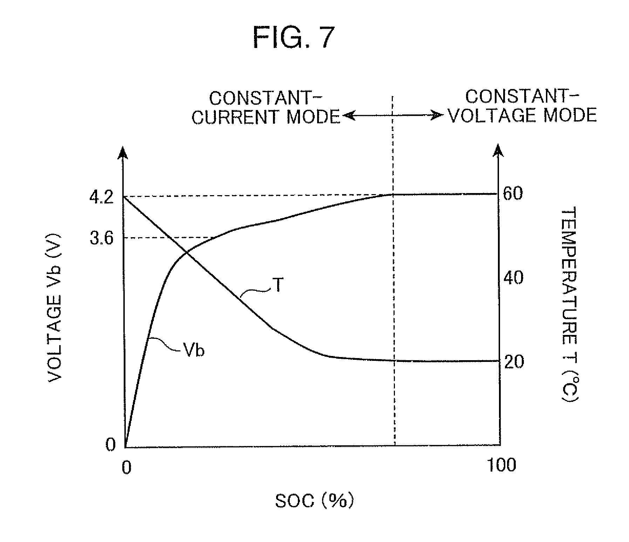

Fig. 7 is a graphical representation showing a correlation between the SOC of the secondary battery 23, the terminal voltage Vb of the secondary battery 23 acquired by the voltage detecting circuit 105 and the temperature T of the secondary battery 23 acquired by the temperature sensor 24 in the step S6.

As shown in Fig. 7, in the step S6, the control unit 106 controls the operation of the inverter power-supply circuit 103 in such a way that the secondary battery 23 is first charged with a constant current in a constant-current (CC) mode. If the charging raises the SOC gradually to heighten the voltage Vb gradually up to 4.2 V, the control unit 106 controls the operation of the inverter power-supply circuit 103 in such a way that the secondary battery 23 is charged with a constant voltage in a constant-voltage (CV) mode where the charging current Ib decreases as the SOC rises.

In the steps S3 to S4, the temperature T of the secondary battery 23 is 60 °C before the charge of the step S6, and in the step S5, the temperature T falls gradually to an outside air temperature, for example, 20 °C and stabilizes there through natural cooling after stopping heating the secondary battery 23.

Accordingly, the secondary battery 23 is charged with heated and is further charged while the temperature thereof is falling, thereby lowering the temperature of the secondary as the SOC of the secondary battery 23 rises. This makes it possible to enhance in balance the reduction effect on the cycle degradation obtained by an improvement in the charge acceptance and the reduction effect on the cycle degradation caused by the dissolution of the positive-electrode active material, thereby suppressing a deterioration in the nonaqueous-electrolyte secondary battery when charged.

Therefore, the reduction effect on the cycle degradation becomes greater than, for example, in the charging art of Background Art where a battery is charged at a raised constant temperature. Furthermore, as shown in Fig. 7, the temperature of the secondary battery 23 declines to the minimum in the last charging stage where the SOC of the secondary battery 23 increases, thereby suppressing a chemical reaction inside of the secondary battery 23 in the last charging stage and thus keeping the secondary battery 23 from raising the temperature abnormallydue to some collapse in the last charging stage.

Moreover, in the steps S3 to S4 before the charge of the step S6, the secondary battery 23 is heated, for example, up to 60 °C which is a temperature for improving the charge acceptance and securing a suppression effect on the cycle degradation. This makes it possible to avoid charging the secondary battery 23 at a low charge acceptance and enhance the cycle-degradation suppression effect.

However, the secondary battery 23 not necessarily has to be heated before charged, and it may be appreciated that the secondary battery 23 is charged while being heated.

Fig. 7 illustrates a so-called CCCV charging system shifting from the constant-current (CC) mode to the constant-voltage (CV) mode, however, another charging system can also be employed. The secondary battery 23 deteriorates in a mode of material degradation, such as the above described degradation caused by a charge at a low charge acceptance and degradation caused by the dissolution of a positive-electrode active material or the decomposition of an electrolyte, as well as in a mode of degradation caused by electrolyte leakage or the like. For example, in a trickle charge, however, the material-degradation mode where the charging circuit 100 secures a suppression effect dominates, thereby making the charging circuit 100 more suitable for a trickle charge.

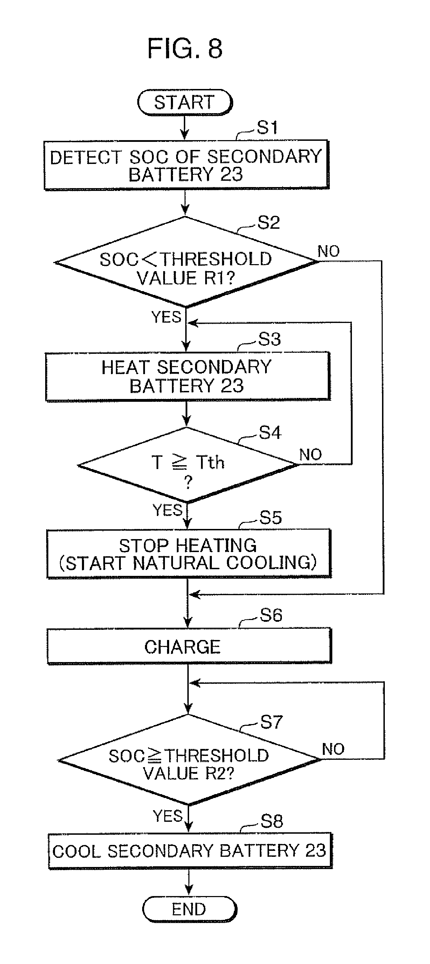

If it is not enough just to cool the secondary battery 23 only by natural cooling, then for example, it is preferable to set a threshold value R2 (second threshold value) larger than the threshold value R1 in advance as an SOC value for suppressing a cycle degradation more effectively by cooling the secondary battery, and as shown in Fig. 8, if the SOC becomes equal to or above the threshold value R2 after the charge of the step S6 starts (YES at a step S7), for the control unit 106 to drive the fan 108 to thereby cool the secondary battery 23 forcedly by air cooling (step S8). In this case, although the threshold value R2 is larger than the threshold value R1 to thereby give a hysteresis to the temperature control operation for a stable operation, the threshold value R2 may be set equally to the threshold value R1. The fan 108 corresponds to an example of the cooling portion, however, the cooling portion is not limited to an air-cooling fan, and for example, a cooling system provided with a Peltier device, a heat pipe or the like may be employed.

In the step S4, the temperature of the secondary battery 23 is controlled based on the temperature T acquired by the temperature sensor 24. Alternatively, it may be appreciated that the secondary battery 23 is heated to a predetermined temperature by using, as the heater 107, for example, a PTC heating element whose temperature is automatically kept at a constant temperature. Without the fan 108, the secondary battery 23 may be heated by heat conduction or with radiation heat, and further, it may be heated by a heating portion embedded in the charging apparatus 1.

The first embodiment illustrates in detail the electric tool 3 provided with the battery pack 2 attachable thereto via the attachment portion 32. Needless to say, however, the same advantages can be obtained in an embodiment where an apparatus includes the battery pack 2 or the charging apparatus 1 itself inside, for example, in an embodiment where an electric automobile has a secondary battery as a main or auxiliary power source thereof. In this case, for example, equipment or apparatus such as an electric automobile may be provided inside with such an apparatus as shown in Fig. 4, and the heater 107 as the heating portion is arranged in any position where the secondary battery 23 can be heated. If an electric automobile including the charging apparatus 1 drives in such a way that a wind blows against a secondary battery, the fan 108 can be omitted, or there is no need to operate the fan 108 while the electric automobile is running. (Second Embodiment)

Next, a description will be given of a charging circuit according to a second embodiment of the present invention.

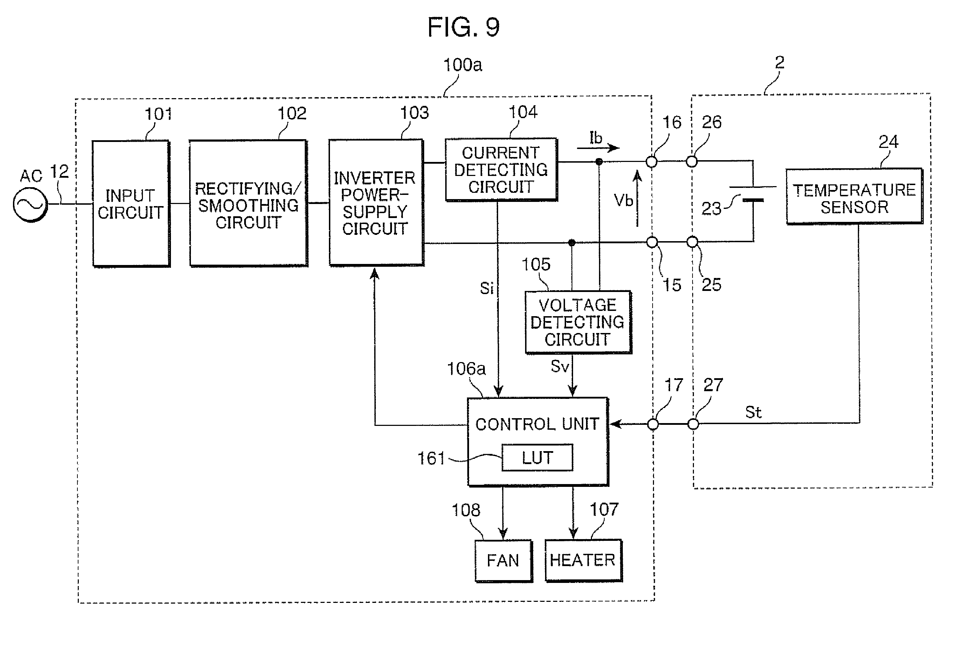

Fig. 9 is a block diagram showing a configuration of a charging circuit 100a according to the second embodiment. The charging circuit 100a of Fig. 9 is different from the charging circuit 100 of Fig. 5 in the following respect. The charging circuit 100a of Fig. 9 includes a control unit 106a provided with an LUT (look-up table) 161 (storage portion) for storing in advance temperature setting information correlating a set temperature Ts suitable for charge and an SOC in the secondary battery 23. The control unit 106a regulates the temperature of the secondary battery 23 by controlling the operation of the heater 107 and the fan 108 in such a way that the temperature indicated by the battery temperature signal St sent to the temperature input terminal 17 comes to the set temperature Ts correlated with the SOC of the secondary battery 23 by the temperature setting information stored in the LUT 161.

Otherwise, it is the same as the charging circuit 100 of Fig. 5 and their description is omitted. An operation will be below described of the charging circuit 100a of Fig. 9.

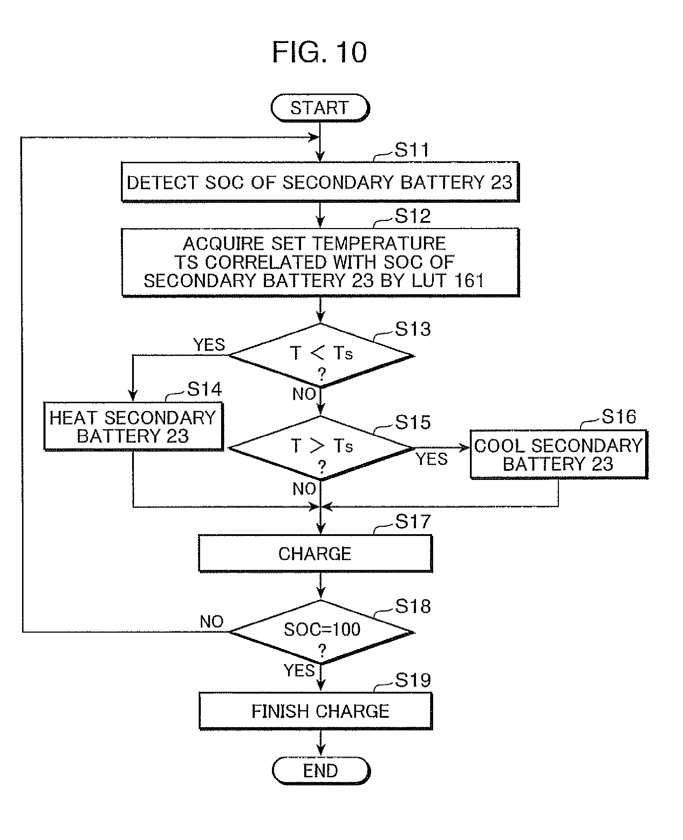

Fig. 10 is a flow chart showing an operation of the charging circuit 100a. First, in the same way as the step S1 of Fig. 8, an SOC of the secondary battery 23 is detected (step S11). Next, the control unit 106 refers to the LUT 161 and acquires the set temperature Ts correlated with the SOC obtained in the step S11 (step S12).

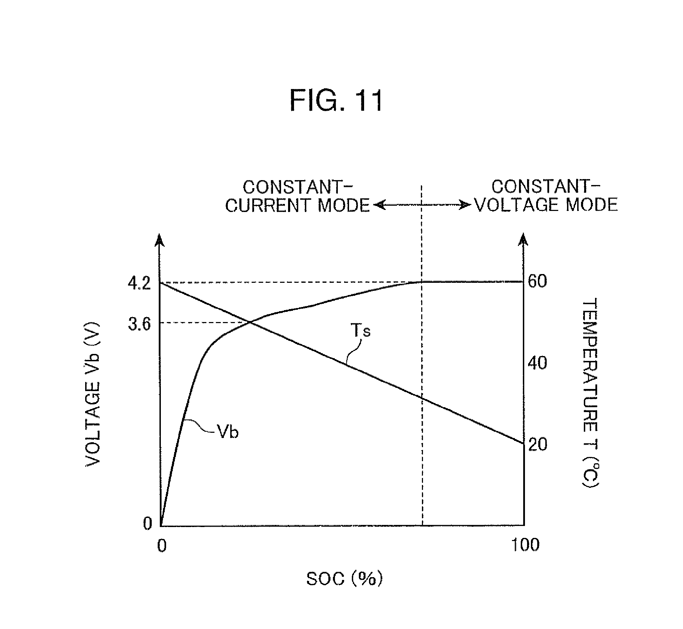

Fig. 11 is a graphical representation showing a correlation between the SOC of the secondary battery 23, the terminal voltage Vb of the secondary battery 23 obtained by the voltage detecting circuit 105 and the setting temperature Ts correlated with the SOC of the secondary battery 23 by the LUT 161. Specifically, a cycle degradation can be suppressed to the maximum by controlling the temperature of the secondary battery 23 in such a way that it coincides with the setting temperature Ts shown in Fig. 11.

The control unit 106 compares the temperature T of the secondary battery 23 obtained by the temperature sensor 24 and the set temperature Ts obtained by the LUT 161 (step S13). If the temperature T is below the set temperature Ts (YES at the step S13), the control unit 106 allows the heater 107 to generate heat, drives the fan 108 to heat the secondary battery 23 (step S14), and moves the processing to a step S17 for starting the charge. In contrast, if the temperature T is beyond the set temperature Ts (NO at the step S13 and YES at a step S15), the control unit 106 allows the heater 107 not to generate heat, drives the fan 108 to cool the secondary battery 23 (step S16), and moves the processing to the step S17 for starting the charge.

If the temperature T is equal to the set temperature Ts (NO at the step S13 and NO at the step S15), the temperature T is suitable for the charge to thereby move the processing to the step S17 without heating nor cooling the secondary battery 23. Similarly to the step S6 of Fig. 6, the control unit 106 starts to charge the secondary battery 23 (step S17).

It repeats the processing of the step S11 to a step S18 until the charge is completed, in other words, until the SOC reaches 100 (%) (NO at the step S18), thereby controlling the temperature of the secondary battery 23 in such a way that it goes along the setting temperature Ts shown in Fig. 11, so that a cycle degradation can be more effectively suppressed.

Next, if the SOC reaches 100 (%) (YES at the step S18), the control unit 106 finishes charging the secondary battery 23 (step S19) . In this case, the LUT 161 sets the set temperature Ts at an SOC of 100 (%) to a lower temperature than at the beginning of the charge, for example, 20 °C, thereby suppressing a chemical reaction inside of the secondary battery in the last charging stage where the SOC of the secondary battery 23 increases and keeping a collapse in the last charging stage from raising the temperature abnormally.

As is the case with the charging apparatus 1, the charging circuits 100 and 100a are provided in an independent charging apparatus, however, they may be built in various electric apparatuses provided with a secondary battery. Alternatively, for example, it may be appreciated that a charging system is configured by forming the charging circuits 100 and 100a with the temperature sensor 24, the inverter power-supply circuit 103, the voltage detecting circuit 105, the control unit 106, the fan 108, the heater 107 and the like around a secondary battery mounted in a vehicle.

A charging circuit according to an aspect of the present invention includes: a connecting terminal for connection to a nonaqueous-electrolyte secondary battery; a heating portion heating the nonaqueous-electrolyte secondary battery; a charging portion charging the nonaqueous-electrolyte secondary battery connected to the connecting terminal; and a control unit which allows the charging portion to charge the nonaqueous-electrolyte secondary battery after allowing the heating portion to heat the nonaqueous-electrolyte secondary battery, lowers the temperature of the nonaqueous-electrolyte secondary battery, and allows the charging portion to further charge the nonaqueous-electrolyte secondary battery.

According to this configuration, the nonaqueous-electrolyte secondary battery is charged after heated by the heating portion. Therefore, at a low charge depth and charge acceptance in the nonaqueous-electrolyte secondary battery before the charge progresses, the temperature of the nonaqueous-electrolyte secondary battery rises to suppress a cycle degradation. As the charge progresses, the depth of charge rises to dissolve more active material at the positive electrode. Accordingly, the nonaqueous-electrolyte secondary battery is charged by lowering the temperature, thereby suppressing a dissolution of the positive-electrode active material or a decomposition of the electrolyte and keeping some dissolution of the positive-electrode active material from causing a cycle degradation. If energy stored in the nonaqueous-electrolyte secondary battery increases as the charge further progresses, then the temperature drops, thereby keeping the temperature from becoming extraordinarily higher in the last charging stage.

Furthermore, preferably, the charging circuit may further include a charge-depth detecting portion detecting a depth of charge equivalent to the ratio of a charging capacity to a battery rated capacity in the nonaqueous-electrolyte secondary battery, in which the control unit allows the heating portion to conduct the heating if a depth of charge detected by the charge-depth detecting portion is below a predetermined first threshold value.

According to this configuration, if a depth of charge detected by the charge-depth detecting portion is below the predetermined first threshold value, and therefore, if the charge acceptance is low in the nonaqueous-electrolyte secondary battery, then the heating portion heats the nonaqueous-electrolyte secondary battery to raise the temperature, thereby suppressing a cycle degradation when charged.

Moreover, preferably, the control unit may allow the charging portion to charge the nonaqueous-electrolyte secondary battery without allowing the heating portion to conduct the heating if a depth of charge detected by the charge-depth detecting portion is above the predetermined first threshold value.

According to this configuration, if a depth of charge detected by the charge-depth detecting portion is above the predetermined first threshold value, and therefore, if the cycle degradation in the nonaqueous-electrolyte secondary battery is aggravated by heating it, the nonaqueous-electrolyte secondary battery is charged without heated, thereby keeping the cycle degradation from being aggravated in the nonaqueous-electrolyte secondary battery.

In addition, preferably, the charging circuit may further include a cooling portion cooling the nonaqueous-electrolyte secondary battery, in which the control unit allows the cooling portion to cool the nonaqueous-electrolyte secondary battery if a depth of charge detected by the charge-depth detecting portion is above a second threshold value equal to or greater than the first threshold value.

According to this configuration, if the depth of charge of the nonaqueous-electrolyte secondary battery is above a second threshold value equal to or greater than the first threshold value, and therefore, if a cycle degradation is more effectively suppressed by cooling the nonaqueous-electrolyte secondary battery, then the cooling portion cools the nonaqueous-electrolyte secondary battery. This makes it possible to cool the nonaqueous-electrolyte secondary battery faster than natural cooling, thereby enhancing the cycle-degradation reduction effect.

Furthermore, preferably, the charging circuit may further include: a charge-depth detecting portion detecting a depth of charge equivalent to the ratio of a charging capacity to a battery rated capacity in the nonaqueous-electrolyte secondary battery; and a temperature detecting portion detecting a temperature of the nonaqueous-electrolyte secondary battery, in which the control unit controls a heating operation conducted by the heating portion in such a way that the temperature lowers as the depth of charge detected by the charge-depth detecting portion increases, while allowing the charging portion to charge the nonaqueous-electrolyte secondary battery.

The temperature for enhancing the cycle-degradation reduction effect lowers as the charge depth of the nonaqueous-electrolyte secondary battery increases and the charge depth of the nonaqueous-electrolyte secondary battery rises gradually as the charging portion continues the charge. Therefore, the cycle-degradation reduction effect becomes greater by lowering the temperature of the nonaqueous-electrolyte secondary battery gradually as the charge depth rises when charged.

Moreover, preferably, the charging circuit may further include a cooling portion cooling the nonaqueous-electrolyte secondary battery, in which the control unit controls the heating operation conducted by the heating portion and a cooling operation conducted by the cooling portion in such a way that the temperature lowers as the depth of charge detected by the charge-depth detecting portion increases, while allowing the charging portion to charge the nonaqueous-electrolyte secondary battery.

According to this configuration, the control unit controls the heating operation conducted by the heating portion and the cooling operation conducted by the cooling portion in such a way that the temperature lowers as the depth of charge detected by the charge-depth detecting portion increases. In this case, the temperature of the nonaqueous-electrolyte secondary battery becomes lower more quickly than cooling the nonaqueous-electrolyte secondary battery naturally by stopping the heating portion from heating it. This makes it possible to drop the temperature of the nonaqueous-electrolyte secondary battery at a speed corresponding to a charge-depth rising speed, thereby enhancing the cycle-degradation reduction effect.

In addition, preferably: a storage portion may be provided which stores in advance temperature setting information correlating the temperature of the nonaqueous-electrolyte secondary battery and the depth of charge in such a way that the temperature lowers appropriately as the depth of charge increases; and the control unit may control the heating operation conducted by the heating portion and the cooling operation conducted by the cooling portion in such a way that the temperature detected by the temperature detecting portion becomes a temperature correlated with the depth of charge detected by the charge-depth detecting portion by the temperature setting information stored in the storage portion, while allowing the charging portion to charge the nonaqueous-electrolyte secondary battery.

According to this configuration, the storage portion has temperature setting information stored in advance correlating the temperature of the nonaqueous-electrolyte secondary battery and the depth of charge in such a way that the temperature lowers appropriately as the depth of charge increases, and the heating operation conducted by the heating portion and the cooling operation conducted by the cooling portion are controlled in such a way that the temperature detected by the temperature detecting portion becomes a temperature correlated with the depth of charge detected by the charge-depth detecting portion by the temperature setting information stored in the storage portion. This makes it possible to set the temperature of the nonaqueous-electrolyte secondary battery to a temperature suitable for the charge according to the depth of charge, thereby suppressing a cycle degradation.

Furthermore, preferably, the control unit may allow the charging portion to start charging the nonaqueous-electrolyte secondary battery after allowing the heating portion to heat the nonaqueous-electrolyte secondary battery.

According to this configuration, the temperature of the nonaqueous-electrolyte secondary battery is previously raised before the charging portion charges the nonaqueous-electrolyte secondary battery, in other words, before the depth of charge rises, and the charging portion charges the nonaqueous-electrolyte secondary battery while suppressing a cycle degradation. This makes it possible to reduce a cycle degradation.

Furthermore, a charging system according to an aspect of the present invention includes an electric apparatus supplied electric power by a nonaqueous-electrolyte secondary battery and a charging circuit charging the nonaqueous-electrolyte secondary battery, in which the charging circuit is any of the above described charging circuits.

According to this configuration, in the electric apparatus supplied electric power by the nonaqueous-electrolyte secondary battery, a cycle degradation can be suppressed in the nonaqueous-electrolyte secondary battery, and the temperature of the nonaqueous-electrolyte secondary battery can be kept from becoming extraordinarily higher in the last charging stage.

Moreover, a charging method according to an aspect of the present invention includes: a process of heating a nonaqueous-electrolyte secondary battery; a process of charging the nonaqueous-electrolyte secondary battery after heating the nonaqueous-electrolyte secondary battery; and a process of lowering the temperature of the nonaqueous-electrolyte secondary battery after charging the nonaqueous-electrolyte secondary battery.

According to this configuration, the nonaqueous-electrolyte secondary battery is charged after heated by the heating portion. Therefore, at a low charge depth and charge acceptance in the nonaqueous-electrolyte secondary battery before the charge progresses, the temperature of the nonaqueous-electrolyte secondary battery rises to suppress a cycle degradation. As the charge progresses, the depth of charge rises to dissolve more active material at the positive electrode. Accordingly, the nonaqueous-electrolyte secondary battery is charged by lowering the temperature, thereby suppressing a dissolution of the positive-electrode active material and keeping some dissolution of the positive-electrode active material from causing a cycle degradation. If energy stored in the nonaqueous-electrolyte secondary battery increases as the charge further progresses, then the temperature drops, thereby keeping the temperature from becoming extraordinarily higher in the last charging stage.

### Practical Example

Practical examples will be described of a system including a nonaqueous-electrolyte secondary battery according to the present invention and a charging circuit charging this secondary battery.

### (Practical Example 1)

A practical example will be described in the first embodiment of the present invention.

A positive-electrode active material is created by burning Li₂CO₃, Co₃O₄, NiO and MnO₂, mixing them into LiNi_{0.33}Mn_{0.33}Co_{0.33}O₂ and burning it ten hours at 900 °C. A 100-weight parts of this positive-electrode active material is stirred together with a 2.5-weight parts of acetylene black, a 4-weight parts of fluororesin binder and a proper quantity of carboxymethyl-cellulose aqueous solution in a dual-arm kneader, therebycreatingapositive-electrodepaste. A 30µ m-thick aluminium foil is coated on both surfaces with this paste, dried, rolled into a total thickness of 99 µ m, a per-unit-area theoretic capacity of 3.7 mAh and a material-contact part porosity of 25 %, and thereafter, cut into a coating width of 52 mm and a coating length of 1660 mm to thereby form a positive-electrode plate.

A negative-electrode active material is created by graphitizing a mesophase globule at a high temperature of 2800 °C (called below the mesophase graphite). A 100-weight parts of this active material is stirred together with a 2.5-weight parts of BM-400B (40-weight parts of solid content) as an SBR modified acrylic acid made by Zeon Corporation, a 1-weight part of carboxymethyl cellulose and a proper quantity of water in a dual-arm kneader, thereby creating a negative-electrode paste. A 0.02mm-thick copper foil is coated on both surfaces with this paste, dried, rolled into a total thickness of 97 µm and a material-contact part porosity of 35 %, and thereafter, cut into a coating width of 57 mm and a coating length of 1770 mm to thereby form a negative-electrode plate.

In a combination of the positive and negative electrodes, the load capacity at the negative electrode in a 4.2-V charge is 250 mAh/g, and the battery is designed to be regulated by the positive-electrode capacity.

Next, a 2.5mm-wide solid aluminium foil not coated with the positive-electrode paste is exposed at the middle of the positive-electrode plate in the longitudinal directions and a 2.5mm-wide solid copper foil not coated with the negative-electrode paste is exposed at both ends of the negative-electrode plate in the longitudinal directions. A 10mm-wide and 0.1mm-thick aluminum lead is welded to the positive-electrode aluminium-foil part, and a 3.0mm-wide copper lead is welded to each of the two negative-electrode copper-foil parts. Sequentially, an electrode group is created by coiling the positive-electrode plate and the negative-electrode plate via a 59mm-wide and 20µ m-thick separator made of polyethylene and is housed in a battery case having a diameter of 26 mm and a height of 65 mm. Next, a sealing plate is welded to the positive-electrode aluminum lead of the electrode group, and the two negative-electrode leads are welded to the bottom of the case. Thereafter, a nonaqueous electrolyte equivalent to a mixed solution (volume ratio of 10:10:80) of ethylene carbonate, methyl ethyl carbonate and dimethyl carbonate containing 1.40-M LiPF₆ dissolved therein is poured by 13 grams to thereby create a cylindrical lithium-ion secondary battery having a nominal capacity of 2.6 Ah and an internal resistance of 19 mΩ after sealed.

The battery pack 2 including four cells connected in series as the thus created lithium-ion secondary battery is first discharged with an electric current of 2.6 A, and the discharge ends at 2.5 V. The battery pack 2 is connected to the charging circuit 100 having the set temperature Tth of 30 °C and given a constant current charge with 2.6 A after the battery is warmed to 20 °C under an environment of 10 °C, and the charge ends at 4.2 V. Next, the battery pack 2 is connected to a load, discharged up to 2.5 V with a constant current of 10 A, and then kept at a halt until the battery temperature comes to 10 °C. Thereafter it is connected to the charging circuit 100 and given a constant current charge with 2.6 A after the battery is warmed to 30 °C, and the charge ends at 4.2 V. This operation is repeated to thereby examine the cycle performance.

### (Practical Example 2)

The battery pack 2 of Practical Example 1 is connected to the charging circuit 100 having the set temperature Tth of 45 °C and given a constant current charge with 2.6 A after the battery is warmed to 45 °C under an environment of 10 °C, and the charge ends at 4.2 V. Next, the battery pack 2 is connected to a load, discharged up to 2.5 V with a constant current of 10 A, and then kept at a halt until the battery temperature comes to 10 °C. Thereafter it is connected to the charging circuit 100 to warm the battery to 45 °C and further given a constant current charge with 2.6 A, and the charge ends at 4.2 V. This operation is repeated to thereby examine the cycle performance.

### (Practical Example 3)

The battery pack 2 of Practical Example 1 is connected to the charging circuit 100 having the set temperature Tth of 60 °C and given a constant current charge with 2.6 A after the battery is warmed to 60 °C under an environment of 10 °C, and the charge ends at 4.2 V. Next, the battery pack 2 is connected to a load, discharged up to 2.5 V with a constant current of 10 A, and then kept at a halt until the battery temperature comes to 10 °C. Thereafter it is connected to the charging circuit 100 to warm the battery to 60 °C and further given a constant current charge with 2.6 A, and the charge ends at 4.2 V. This operation is repeated to thereby examine the cycle performance.

### (Practical Example 4)

The battery pack 2 of Practical Example 1 is connected to the charging circuit 100 having the set temperature Tth of 45 °C and given a constant current charge with 2.6 A after the battery is warmed to 45 °C under an environment of 10 °C, and the charge ends at 4.2 V. Next, the battery pack 2 is connected to a load and discharged up to 3. 67 V with a constant current of 10 A. At this time, the discharge time is 36 minutes and the battery capacity is 40 % of a full-charge capacity. Thereafter, it is kept at a halt until the battery temperature comes to 10 °C, then connected to the charging circuit 100 and given a constant current charge with 2.6 A after the battery is warmed to 45 °C, and the charge ends at 4.2 V. This operation is repeated to thereby examine the cycle performance.

### (Practical Example 5)

The battery pack 2 of Practical Example 1 is connected to the charging circuit 100 having the set temperature Tth of 45 °C and given a constant current charge with 2.6 A after the battery is warmed to 45 °C under an environment of 10 °C, and the charge ends at 4.2 V. Next, the battery pack 2 is connected to a load and discharged up to 3.75 V with a constant current of 10 A. At this time, the discharge time is 24 minutes and the battery capacity is 60 % of a full-charge capacity. Thereafter, it is kept at a halt until the battery temperature comes to 10 °C, then connected to the charging circuit 100 and given a constant current charge with 2.6 A without being warmed, and the charge ends at 4.2 V. This operation is repeated to thereby examine the cycle performance.

### (Practical Example 6)

The battery pack of Practical Example 1 is connected to a charging circuit 100 starting to give a charge at 45 °C regardless of the SOC without executing the steps S1 and S2 of the flow chart shown in Fig. 6. It is given a constant current charge with 2.6 A after the battery is warmed to 60 °C under an environment of 10 °C, and the charge ends at 4.2 V. Next, the battery pack is connected to a load and discharged up to 3.75 V with a constant current of 10 A. At this time, the discharge time is 24 minutes and the battery capacity is 60 % of a full-charge capacity. Thereafter, it is kept at a halt until the battery temperature comes to 10 °C, then connected to the charging circuit and given a constant current charge with 2.6 A after the battery is warmed to 45 °C, and the charge ends at 4.2 V. This operation is repeated to thereby examine the cycle performance.

### (Comparative Example 1)

The battery pack 2 of Practical Example 1 is connected to a charger not provided with the heater 107 nor the fan 108 and given a constant current charge with 2.6 A without being warmed under an environment of 10 °C, and the charge ends at 4.2 V. Next, the battery pack 2 is connected to a load, discharged up to 2.5 V with a constant current of 10 A. Thereafter, it is kept at a halt until the battery temperature comes to 10 °C, then connected to the charger and given a constant current charge with 2.6 A without being warmed, and the charge ends at 4.2 V. This operation is repeated to thereby examine the cycle performance.

### (Comparative Example 2)

The battery pack 2 of Practical Example 1 is connected to a charger similar to Comparative Example 1 and given a constant current charge with 2.6 A without being warmed under an environment of 10 °C, and the charge ends at 4.2 V. Next, the battery pack 2 is connected to a load and discharged up to 3.67 V with a constant current of 10 A. At this time, the discharge time is 36 minutes and the battery capacity is 40 % of a full-charge capacity. Thereafter, it is kept at a halt until the battery temperature comes to 10 °C, then connected to the charger and given a constant current charge with 2.6 A without being warmed, and the charge ends at 4.2 V. This operation is repeated to thereby examine the cycle performance.

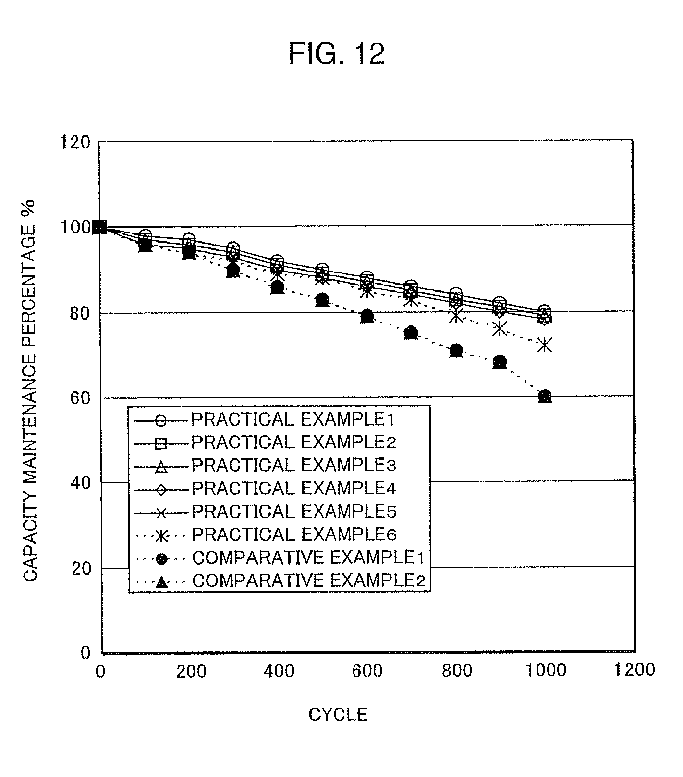

Under the conditions of Practical Examples 1 to 6 and Comparative Examples 1 and 2, a charge-and-discharge cycle is repeated to thereby detect a pack capacity every 100 cycles. The thus detected capacity is equivalent to a discharge capacity obtained by giving a charge up to 4.2 V with 2.6 A under an environment of 20 °C, halting for 30 minutes and giving a discharge up to 2.5 V with 2.6 A. Fig. 12 shows transitions in the percentage of a maintained capacity in an initial capacity when detecting a pack capacity every 100 cycles in the repeated charge-and-discharge cycles under the conditions of Practical Examples 1 to 6 and Comparative Examples 1 and 2.

Practical Examples 1 to 6 are superior in the cycle capacity maintenance percentage to Comparative Examples 1 and 2. In Comparative Examples 1 and 2, a charge is given at a low temperature in a low SOC state, thereby worsening the charge acceptance at the negative electrode to aggravate the cycle degradation. In Practical Example 6, charge is given at a hig temperature in a high SOC state, thereby accelerating the dissolution of a positive electrode or the decomposition of an electrolyte to aggravate the cycle degradation.

### Industrial Applicability

The present invention presents a nonaqueous-electrolyte secondary-battery charging system capable of managing the temperature of a nonaqueous-electrolyte secondary battery appropriately when charging the secondary battery, thereby suppressing a degradation caused by a cycle operation in the secondary battery to make the secondary battery usable in a safer condition and highly industrially Applicable.

## Claims

1. A charging circuit, **characterized by** including:
a connecting terminal for connection to a nonaqueous-electrolyte secondary battery;
a heating portion heating the nonaqueous-electrolyte secondary battery;
a charging portion charging the nonaqueous-electrolyte secondary battery connected to the connecting terminal; and
a control unit which allows the charging portion to charge the nonaqueous-electrolyte secondary battery after allowing the heating portion to heat the nonaqueous-electrolyte secondary battery, lowers the temperature of the nonaqueous-electrolyte secondary battery, and allows the charging portion to further charge the nonaqueous-electrolyte secondary battery.

2. The charging circuit according to claim 1, **characterized by** further including a charge-depth detecting portion detecting a depth of charge equivalent to the ratio of a charging capacity to a battery rated capacity in the nonaqueous-electrolyte secondary battery,
in that the control unit allows the heating portion to conduct the heating if a depth of charge detected by the charge-depth detecting portion is below a predetermined first threshold value.

3. The charging circuit according to claim 2, **characterized in that** the control unit allows the charging portion to charge the nonaqueous-electrolyte secondary battery without allowing the heating portion to conduct the heating if a depth of charge detected by the charge-depth detecting portion is above the predetermined first threshold value.

4. The charging circuit according to claim 2 or 3, **characterized by** further including a cooling portion cooling the nonaqueous-electrolyte secondary battery,
in that the control unit allows the cooling portion to cool the nonaqueous-electrolyte secondary battery if a depth of charge detected by the charge-depth detecting portion is above a second threshold value equal to or greater than the first threshold value.

5. The charging circuit according to claim 1, **characterized by** further including:
a charge-depth detecting portion detecting a depth of charge equivalent to the ratio of a charging capacity to a battery rated capacity in the nonaqueous-electrolyte secondary battery; and
a temperature detecting portion detecting a temperature of the nonaqueous-electrolyte secondary battery,
in that the control unit controls a heating operation conducted by the heating portion in such a way that the temperature lowers as the depth of charge detected by the charge-depth detecting portion increases, while allowing the charging portion to charge the nonaqueous-electrolyte secondary battery.

6. The charging circuit according to claim 5, **characterized by** further including a cooling portion cooling the nonaqueous-electrolyte secondary battery,
in that the control unit controls the heating operation conducted by the heating portion and a cooling operation conducted by the cooling portion in such a way that the temperature lowers as the depth of charge detected by the charge-depth detecting portion increases, while allowing the charging portion to charge the nonaqueous-electrolyte secondary battery.

7. The charging circuit according to claim 6, **characterized in that:**
a storage portion is provided which stores in advance temperature setting information correlating the temperature of the nonaqueous-electrolyte secondary battery and the depth of charge in such a way that the temperature lowers appropriately as the depth of charge increases; and
the control unit controls the heating operation conducted by the heating portion and the cooling operation conducted by the cooling portion in such a way that the temperature detected by the temperature detecting portion becomes a temperature correlated with the depth of charge detected by the charge-depth detecting portion by the temperature setting information stored in the storage portion, while allowing the charging portion to charge the nonaqueous-electrolyte secondary battery.

8. The charging circuit according to any one of claims 1 to 7, **characterized in that** the control unit allows the charging portion to start charging the nonaqueous-electrolyte secondary battery after allowing the heating portion to heat the nonaqueous-electrolyte secondary battery.

9. A charging system, **characterized by** including:
an electric apparatus supplied electric power by a nonaqueous-electrolyte secondary battery; and
a charging circuit charging the nonaqueous-electrolyte secondary battery,
in that the charging circuit is the charging circuit according to any one of claims 1 to 8.

10. A charging method, **characterized by** including:
aprocessofheatinganonaqueous-electrolytesecondary battery;
a process of charging the nonaqueous-electrolyte secondary battery after heating the nonaqueous-electrolyte secondary battery; and
a process of lowering the temperature of the nonaqueous-electrolyte secondary battery after charging the nonaqueous-electrolyte secondary battery.
